# EUROPEAN PATENT SPECIFICATION

(11) **EP 2 728 643 B1**
(45) Date of publication and mention of the grant of the patent: **19.10.2016**
(21) Application number: 11868971.0
(22) Date of filing: 25.11.2011
(51) Int. Cl.: H01M 2/10, H01M 2/20, H01M 6/40, H01M 6/42, H01M 10/04, B65B 63/00, B65B 5/10

(54) **METHOD FOR PACKAGING A THIN FILM BATTERY AND APPARATUS FOR MANUFACTURING A THIN FILM BATTERY PACKAGE**
VERFAHREN ZUM VERPACKEN EINER DÜNNSCHICHTBATTERIE UND VORRICHTUNG ZUR HERSTELLUNG EINER DÜNNSCHICHTBATTERIEPACKUNG
PROCÉDÉ DE MISE EN BOÎTIER D'UNE BATTERIE À COUCHES MINCES ET APPAREIL DE FABRICATION D'UN BOÎTIER DE BATTERIE À COUCHES MINCES

(30) Priority: 01.07.2011 KR 20110065516
(43) Date of publication of application: 07.05.2014
(73) Proprietor: GS ENERGY CORPORATION, Gangnam-gu Seoul 135-985 (KR)
(72) Inventor: KIM, Yong Yeon, Gwangmyeong-si, Gyeonggi-do 423-030 (KR); CHOI, Soo Tae, Incheon 406-765 (KR)
(74) Representative: Prinz & Partner mbB
(86) International application number: PCT/KR2011/009093
(87) International publication number: WO 2013/005897

(56) References cited:
- JP-A- 6 231 796
- JP-A- 6 231 797
- JP-A- 2004 273 436
- JP-A- 2010 161 097
- KR-A- 20090 113 106

## Description

### [Technical Field]

The present invention relates to a thin film package manufacturing method, and more particularly, to a thin film battery packing method by which battery units can be stacked, bonded to each other, and subjected to safe thermal curing on a packing housing, and an apparatus for manufacturing a thin film battery package.

### [Background Art]

In recent years, as electronic devices and elements have been miniaturized and their related technologies have rapidly developed, thin films have attracted attention as ultra-small power sources for driving such electronic devices and elements.

A thin film battery is a battery having an entire thickness of about several micrometers in which all constituent components such as a cathode, an anode, and an electrolyte are deposited in the form of thin films.

The thin films are generally deposited through physical vapor deposition such as sputtering, and chemical vapor deposition or a liquid method such as a sol-gel method are also used.

Technology for packaging a thin film battery that can achieve high capacity is required to expand applications of the thin film battery.

JP 2010 161097 A discloses a manufacturing method for an electrochemical cell comprising a container body with through holes wherein an electrode active material is encompassed by the container body.

### [Disclosure]

### [Technical Problem]

The present invention has been made to solve such problems, and an aspect of the present invention is to provide a thin film battery packaging method by which battery units can be sequentially stacked and bonded to each other on a package housing having various stacking depths to perform curing in a single process, and an apparatus for manufacturing a thin film battery package.

Another aspect of the present invention is to provide a thin film battery packaging method by which battery units can be safely stacked and bonded to each other in a stacking space of a package housing, and an apparatus for manufacturing a thin film battery package.

### [Technical Solution]

In accordance with one aspect of the present invention, a thin film battery packaging method includes: measuring a stacking depth of a stacking space of a package housing, sequentially stacking the battery units in the stacking space by means of a battery moving unit, wherein an electrically conductive adhesive is deposited on a bottom of the package housing or on an already stacked thin film battery unit prior to stacking the next thin film battery unit, and wherein prior to depositing said adhesive and stacking the battery units, an average depth of the battery units to be stacked is calculated by the controller, thermally curing the adhesive of the completely stacked battery units such that the battery units are electrically connected to each other.

In accordance with another aspect of the present invention, a thin film battery packaging apparatus is provided comprising:
a battery moving unit moving a plurality of battery units and sequentially stacking the battery units in a stacking space of a package housing;
a package control unit controlling the battery moving unit such that a stacking depth set in the stacking space of the package housing and a
calculated average depth of the battery units to be stacked are equalized;
an adhesive application unit comprising an adhesive application nozzle for applying an electrically conductive adhesive to the stacking space and the battery units, and an adhesive application nozzle drive unit moving the adhesive application nozzle along a predetermined movement path; and
a heater thermally curing the adhesive of the completely stacked battery units such that the battery units are electrically connected to each other.

### [Advantageous Effects]

According to the present invention, battery units can be sequentially stacked and bonded to each other on a package housing having various stacking depths to perform curing in a single process.

In addition, battery units can be safely stacked and bonded to each other in a stacking space of a package housing.

### [Description of Drawings]

Fig. 1 is a schematic view of a thin film battery packaging apparatus according to the present invention;
Fig. 2 is a view of a method of measuring a stacking depth of a package housing;
Fig. 3 is a table showing one example of calculating an average thickness of battery units, stacking locations corrected based on an average application thickness of the adhesive, and corrected application locations;
Fig. 4 is a sectional view showing a process of stacking and bonding a first battery unit in the stacking space of the package housing;
Fig. 5 is a sectional view showing a process of stacking and bonding a second battery unit in the stacking space of the package housing;
Fig. 6 is a sectional view of the package housing in which the battery units are completely stacked;
Fig. 7 is a flowchart of a thin film battery packaging method according to one embodiment of the present invention;
Fig. 8 is a sectional view showing an initial stacking location setting process in the package housing;
Fig. 9 is a sectional view showing a process of stacking and bonding a first battery unit in the stacking space of the package housing;
Fig. 10 is a sectional view showing a process of measuring a correction depth to an upper surface of the first battery unit;
Fig. 11 is a sectional view showing a process of stacking and bonding a second battery unit in the stacking space of the package housing;
Fig. 12 is a sectional view showing a process of measuring a correction depth to an upper surface of the second battery unit;
Fig. 13 is a sectional view showing a process of stacking and bonding a fifth battery unit on a fourth battery unit stacked in advance;
Fig. 14 is a sectional view showing a process of stacking and bonding a sixth battery unit on the fifth battery unit of Fig. 13;
Fig. 15 is a flowchart of the thin film battery packaging method according to the embodiment of the present invention;

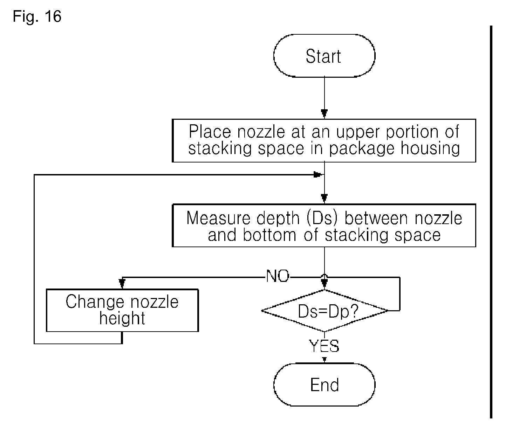

Fig. 16 is a flowchart of a process of setting an initial stacking location; and
Fig. 17 is a flowchart of a process of setting an initial stacking location.

### [Best Mode]

Hereinafter, a thin film battery packaging method and a thin film package manufacturing apparatus according to exemplary embodiments of the present invention will be described with reference to the accompanying drawings.

In the following embodiments, the thin film battery packaging method will be described as a method of using the thin film battery packaging apparatus.

First, a thin film battery packaging apparatus according to one embodiment of the invention will be described.

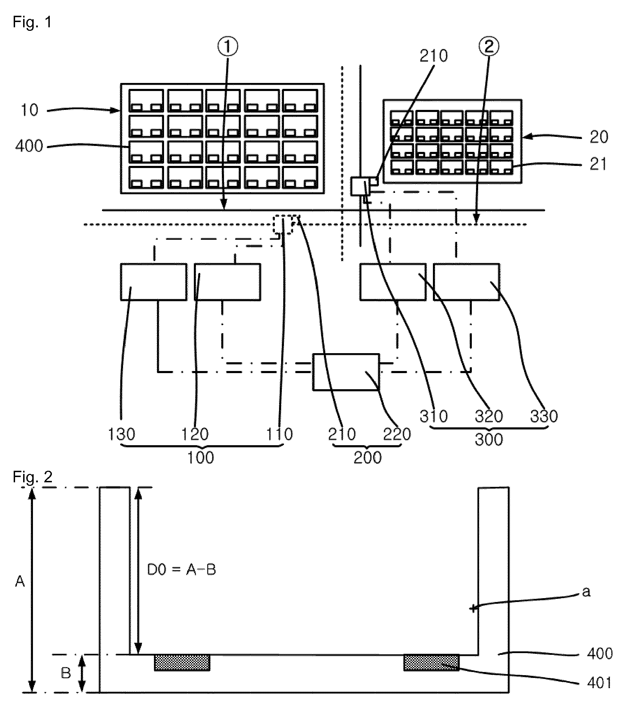

Referring to Fig. 1, the thin film battery packaging apparatus according to the embodiment includes a package housing storage 10, a battery storage 20, a battery moving unit 100, a package control unit 200, and a heater (not shown).

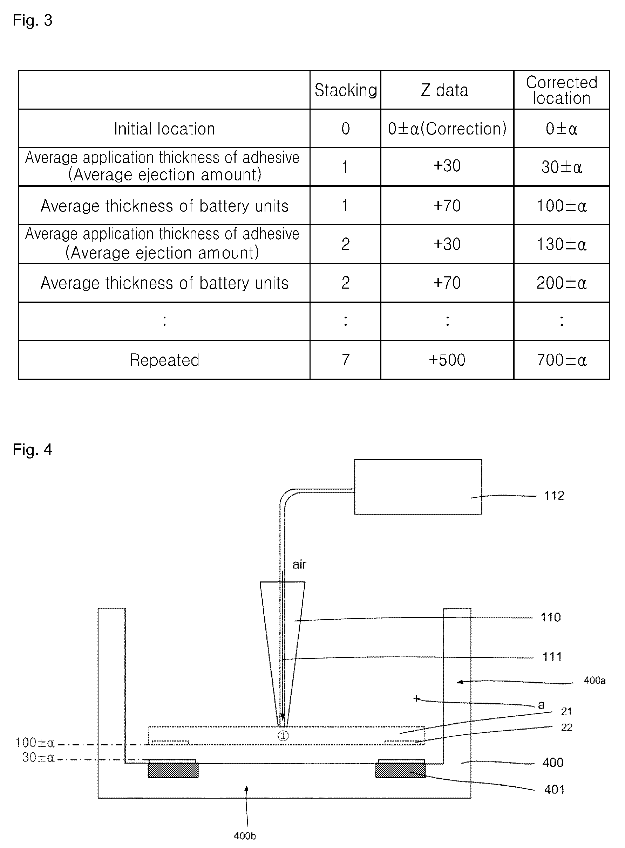

Referring to Fig. 4, a plurality of package housings 400 is placed in the package housing storage 10. Each of the package housings 400 has a stacking space (a), an upper side of which is open. The stacking space (a) has a predetermined depth from the open upper surface thereof. The package housing 400 is formed of an insulating material such as a ceramic material.

A plurality of battery units 21 is placed in the battery storage 20. Each of the battery units 21 has a predetermined thickness. Each of the battery units 21 has an area by which the battery units 21 may be introduced into the stacking space (a). For example, each of the battery units may have a thickness of 70 µm.

The battery moving unit 100 includes a vacuum generator 130, a vacuum nozzle 110 which adsorbs or grips the battery units under vacuum created by the vacuum generator 130, and a vacuum nozzle driver 120 which moves the vacuum nozzle 110 along a first movement path ① connecting the package housing storage 10 and the battery storage 20.

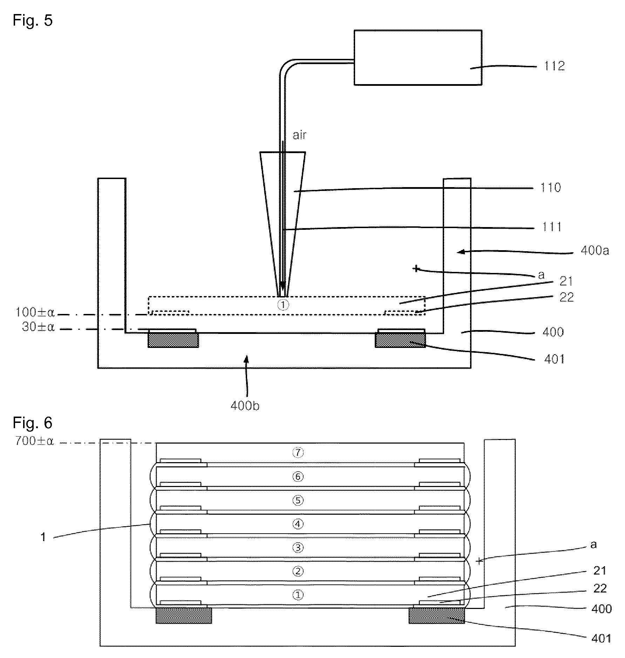

As shown in Figs. 4 and 5, the battery moving unit 100 is provided to the vacuum nozzle 110, and may include an air discharge unit 112 for discharging air supplied from the outside to the sequentially stacked battery units 21 to form a predetermined pressure. Here, the vacuum nozzle 110 is formed with an air hole 111, through which air is discharged.

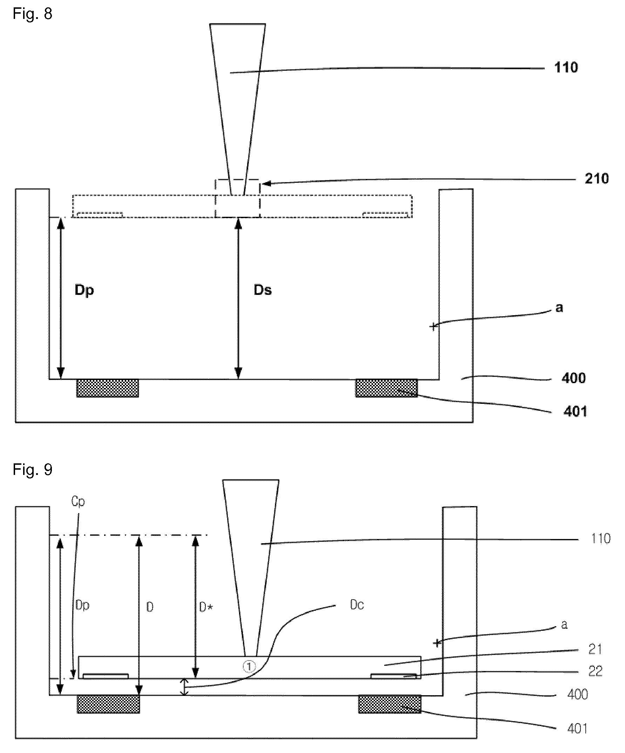

Referring to Fig. 9, when the battery units 21 are stacked in the stacking space (a), the package control unit 200 controls operation of the battery moving unit 100 such that a stacking depth Dp set in the stacking space (a) of the package housing 400 and a correction depth D varying as the battery units 21 are sequentially stacked in the stacking space (a) can be equalized.

Referring to Figs. 1 and 9, the package control unit 200 includes a height measuring unit 210 and a controller 220.

The height measuring unit 210 is provided to the vacuum nozzle 210 and may measure a stacking depth Dp of the package housing 400 and a correction depth D of the battery unit 21 stacked in the stacking space (a).

The height measuring unit 210 may measure the stacking depth Dp or the correction depth D in a contact or non-contact manner. Although not shown, the non-contact type height measuring unit 210 may include any of an optical sensor having a light emitting unit and a light receiving unit, a laser sensor, a distance measuring sensor, and an ultrasonic sensor.

The controller 220 is electrically connected to the height measuring unit 210, and may control operation of the battery moving unit 100 such that the measured correction depth D and stacking depth Dp are the same.

Referring to Figs. 1, 2, and 7, the package control unit 200 according to the present invention may measure a stacking depth D0 of the stacking space (a) in the package housing 400, correct a stacking location of each of the battery units 21 such that an average depth defined as the battery units 21 are stacked becomes equal to the stacking depth D0, and sequentially stack the battery units 21 in the stacking space at the corrected stacking locations.

Here, the controller 220 of the package control unit 200 may set an average thickness of the battery units 21, set an average application thickness of an adhesive 1 applied upon stacking the battery units 21, add the average thickness of the battery units 21 and the average application thickness of the adhesive 1, and set the added value to the average depth.

The controller 220 may set a height providing an average thickness of the battery units 21 to a stacking location of each of the battery units 21, and set a height providing an average application thickness of the adhesive 1 to an application location of the adhesive 1.

The controller 220 may correct the stacking location and the application location such that the stacking depth and the average depth are the same.

The controller 220 may stack the battery units 21 at the corrected stacking locations using the battery moving unit 100, and apply the adhesive at the corrected application locations using the adhesive application unit 300.

The heater according to the present invention thermally cures or thermally processes the adhesive 1 between the battery units 21 that are completely stacked.

As the adhesive 1 is thermally cured, the adhesive 1 has improved electrical conductivity. Thus, finally, the battery units 21 are electrically connected to each other in parallel.

Here, the heater may be an apparatus for emitting ultraviolet or infrared light.

Alternatively, the heater may be a forced convection oven.

Here, the convection oven may be of an individual thermal processing type that individually thermally processes the package housing 400, or may be an inline type oven chamber of a rail movement type.

During thermal processing, the curing temperature may be set to less than 120°C to prevent damage to battery units such as a lithium battery.

The apparatus for manufacturing a thin film battery package includes an adhesive application unit 300.

The adhesive application unit 300 includes an adhesive supply unit 330 for supplying an adhesive 1 (see Fig. 9) that is a conductive paste, an adhesive application nozzle 310 for receiving the adhesive from the adhesive supply unit 330 and supplying the conductive adhesive 1 to the stacking space (a) and the battery unit 21, and an adhesive application nozzle driver 320 moving the adhesive application nozzle 310 along a second movement path ②.

The second movement path ② is a path connecting the package housing storage part 10 and the battery storage part 20, and is provided separately from the first movement path ②.

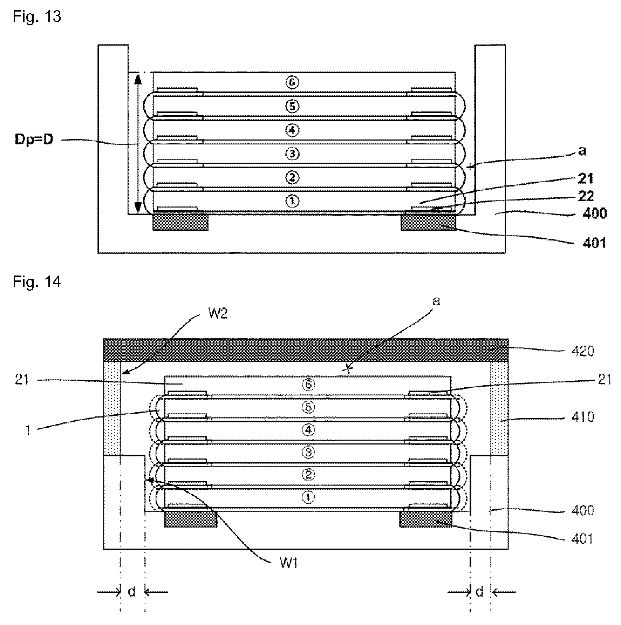

Referring to Fig. 14, the package housing 400 according to the invention is provided at an upper end thereof with a support member 410 formed of Kovar alloy.

The support member 410 is placed at the upper end of the case housing 400 and may be separately formed from the case housing 400 or may be integrally formed therewith.

The support member 410 may have a predetermined height from the upper end of the case housing 400.

The support member 410 has an inner surface W2 enclosing a side surface of the interior space (a). The inner surface W2 of the support member 410 and an inner wall W1 of the interior space (a) are formed so as not to meet each other.

That is, the support member 410 is stepped to the outside.

The inner surface W2 of the support member 410 is separated outwards from the inner wall W1 of the interior space (a) by a predetermined distance d. The support member 410 has a smaller sectional width than that of the case housing 400 formed under the support member 410.

In this configuration, when the adhesive 1, that is, a conductive paste, is excessively deposited between the battery units 21, the adhesive 1 can excessively protrude laterally through a gap between the battery units 21.

A conductive paste coating layer 1 protrudes outward from sides of upper fourth to sixth battery units 21 enclosed by the support member 400.

Here, since the inner surface W2 of the support member 400 is separated from the inner wall W1 of the interior space (a) by a predetermined distance 'd', the adhesive 1 protruding from the sides of the battery units cannot contact the inner surface W2 of the support member 400.

Thus, the present invention can prevent electrical short circuit between the battery units 21 and the metallic support member 400.

Next, the thin film battery packaging method using the thin film battery packing apparatus will be described.

### First Embodiment

Fig. 2 shows one example of measuring a stacking depth of a stacking space formed in a package housing.

Referring to Fig. 2, the first step of measuring a stacking depth D0 of a stacking space (a) of a package housing 400 is performed.

The stacking space (a) of the package housing 400 is enclosed by a sidewall 400a and has a bottom formed on a lower surface thereof. Thus, the package housing 400 has a sidewall 400a and a bottom section 400b forming the bottom thereof and having a predetermined thickness.

A sidewall height A from a lower end of the package housing 400 to an upper end of the sidewall 400a is measured. A thickness B of the bottom section 400b of the package housing 400 is measured.

The thickness of the bottom section is subtracted from the sidewall height A. Thus, a depth D0 of the stacking space (a) may be calculated.

Thereafter, the second step is performed by correcting stacking locations of battery units 21 such that an average depth formed as the battery units 21 (see Fig. 5) becomes equal to the stacking depth D0, followed by stacking the battery units 21 in the stacking space (a) at the corrected stacking locations.

Hereinafter, the second step will be described in more detail.

### Average Depth Setting Step

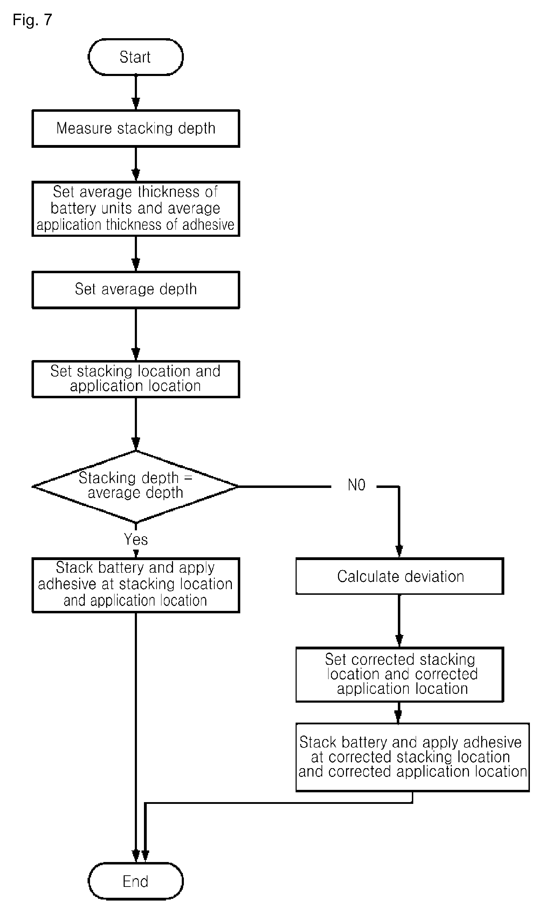

Fig. 7 shows a thin film battery packaging method according to one embodiment of the present invention.

Referring to Figs. 1 and 7, the controller 220 sets an average thickness of the battery units 21 (see Fig. 2) and an average ejection amount by which an adhesive is ejected from an adhesive application nozzle 310. Here, the average ejection amount may be proportional to an average application thickness by which the adhesive is applied on upper surfaces of the battery units 21.

The controller 220 adds an average thickness of the battery units 21 and an average application thickness of the adhesive 1, and sets the added value to the average depth.

### Stacking and Application Location Setting Step

The controller 220 sets a height providing the average thickness of the battery units 21 to the stacking locations of the battery units 21. The stacking locations are imaginary stacking locations.

The controller 220 sets a height providing the average application thickness of the adhesive 1 to an application location of the adhesive 1. The application location is an imaginary application location.

### Initial location Correction Step

The controller 220 corrects the stacking location and the application location such that a stacking depth D0 and the average depth calculated are initially equalized.

That is, when the stacking depth D0 and the average depth are the same, a deviation α between the values does not exist.

On the contrary, when the stacking depth D0 and the average depth are different, a deviation α exists. In this case, as the deviation α is added to or subtracted from the average depth, the initial stacking locations of the battery units 21 and the application location of the adhesive 1 can be corrected.

### Stacking and Application Step

Subsequently, the controller 220 allows the adhesive application nozzle 310 to apply the adhesive 1 while allowing the battery moving unit 100 to stack the battery units 21 in a stacking space (a) at the corrected stacking location.

Referring to Figs. 2 to 7, a method of stacking the battery units 21 will be described in detail.

Fig. 3 is a table showing one example of calculating an average thickness of battery units, stacking locations corrected based on the average application thickness of the adhesive, and corrected application locations.

Referring to Figs. 2 and 3, the initial location is a lowermost location at the measured stacking depth D0. That is, the initial location is a bottom location of the stacking space (a). The stacking depth d0 corresponds to Z-axis data.

The average thickness of the battery units 21 is set to 70 µm, and the average adhesive application thickness is set to 30 µm.

Here, the controller 220 sets stacking locations of the battery units 21 and adhesive application locations. The stacking locations are a location of a height corresponding to an average thickness of the battery units, and the adhesive application locations are locations of a height corresponding to an average application thickness.

The controller 220 adds an average thickness of the battery units 21 and an average application thickness of the adhesive 1 applied between the battery units 21 and the bottom to calculate an average depth.

The controller 220 calculates a deviation α to equalize the average depth and the measured depth D0.

When no deviation α is present, the average depth and the measured depth D0 are the same, and when there is a deviation α, the average depth and the measured depth D0 are different. A deviation ±α shown in the table of Fig. 3 is a constant added or subtracted such that the average depth and the measured depth D0 are equalized.

Thus, the initial location is set to a location of 0±α. Here, 'α' is 0 or '±constant'.

Fig. 4 shows a process of applying an adhesive at the initial location and stacking a first battery unit.

Referring to Fig. 4, the adhesive application nozzle 310 is in a standby mode at a height of 30±α. Here, the height of 30±α is a corrected application height

The adhesive 1 is applied to the bottom of the stacking space (a) to have an average application thickness of 30 µm. Thus, The adhesive 1 is applied to the bottom of the stacking space (a) to have an height of 30 µm.

In particular, one end of the adhesive application nozzle 310 may be disposed to be separated upward from 30±α by a predetermined distance. This is because the ejected adhesive 1 can be pulled up while sticking to the one end of the adhesive application nozzle 310.

Thus, the adhesive 1 contacts electrodes 401 formed on the bottom of the stacking space (a).

After the adhesive 1 is applied, the adhesive application nozzle 310 is returned to an initial location, and the vacuum nozzle 110 stands by at the corrected stacking location providing a height of 100±α of the stacking space (a) while the first battery unit 21 is adsorbed under vacuum.

The vacuum nozzle driver 120 releases the vacuum.

Thus, the first battery unit 21 is separated from the vacuum nozzle 110 and is dropped to the bottom of the stacking space (a). Terminals 22 of the first battery unit 21 are bonded to the adhesive 1 contacting terminals 401.

At the same time, the air discharge unit 112 discharges air having a predetermined pressing force to an upper surface of the first unit battery 21 gripped through the air hole 111 formed in the vacuum nozzle 110.

Thus, the first battery unit 21 is pressed downward by the discharged air, and the terminals 22 of the first battery unit 21 stably contact the adhesive 1.

Fig. 5 shows a process of stacking and bonding a second battery unit onto the first battery unit.

Referring to Fig. 5, after the first battery unit 21 is stacked in the stacking space of the package housing, the adhesive application nozzle 310 is placed at a corrected application location providing a height of 130±α in the stacking space (a).

The adhesive application nozzle 310 applies an average ejection amount of the adhesive to an upper surface of the first battery unit 21

Subsequently, after the adhesive 1 is applied thereto, the adhesive application nozzle 310 is returned to the initial location, and the vacuum nozzle 110 is in a standby mode at the corrected stacking location providing a height of 200±α in the stacking space (a) while the second battery unit 21 is adsorbed under vacuum.

The vacuum nozzle driver 120 releases the vacuum.

Thus, the second battery unit 21 is separated from the vacuum nozzle 110, and is dropped to the bottom of the stacking space (a). Terminals 22 of the second battery unit 21 are bonded to the adhesive 1 applied to the upper surface of the first battery unit 21.

At the same time, the air discharge unit 112 discharges air having a predetermined pressing force towards an upper surface of the second battery unit 21 gripped through the air hole 111 formed in the vacuum nozzle 110.

Thus, the second battery unit 21 is pressed downward. Accordingly, the adhesive 1 applied between the first battery unit 21 and the second battery unit 21 flows to opposite sides of the first battery unit 21 while being pushed to the outside, and is easily physically connected to the adhesive 1 at a lower end thereof.

That is, the height of the adhesive 1 such as epoxy can be lowered and the adhesive can be easily connected (in parallel) to the battery unit 21 at the lower end thereof by pressing the battery unit 21 downward through discharge of air.

Herein, the adhesive 1 is a conductive epoxy resin, and may be a single-liquid phase type or conductive pastes.

According to the present invention, the adhesive 1 may contain at least one of ITO, Ag, Pd, and Ni. The adhesive may be single-liquid phase type or two-liquid phase type conductive pastes.

Here, the conductive pastes may have a viscosity of 10,000 to 20,000.

In summary, the adhesive according to the present invention may be a single-liquid phase type conductive paste and may contain at least one of ITO, Ag, Pd, and Ni. Alternatively, the adhesive may be a two-liquid phase type conductive paste and may contain at least one of ITO, Ag, Pd, and Ni.

Fig. 7 shows a state in which first to seventh battery units are stacked.

A process of stacking third to seventh battery units 21 and applying the adhesive between the battery units 21 is the same as described above.

Here, the corrected stacking location of the seventh unit battery 21 is on the sixth unit battery 21 at the corrected stacking location of a height of 700±α.

As described above, after the battery units 21 are completely stacked in the stacking space (a), the battery units 21 are thermally processed.

Thermal processing is performed using a forced convection oven (not shown) to cure the battery units 21.

The heater controls a thermal processing temperature to less than 120°C to prevent damage to the unit battery 21 that is a nickel battery.

The oven may be an apparatus that can independently thermally cure the package housing 400 in which the battery units are stacked, or may be an inline oven chamber of a rail movement type.

### Second Embodiment

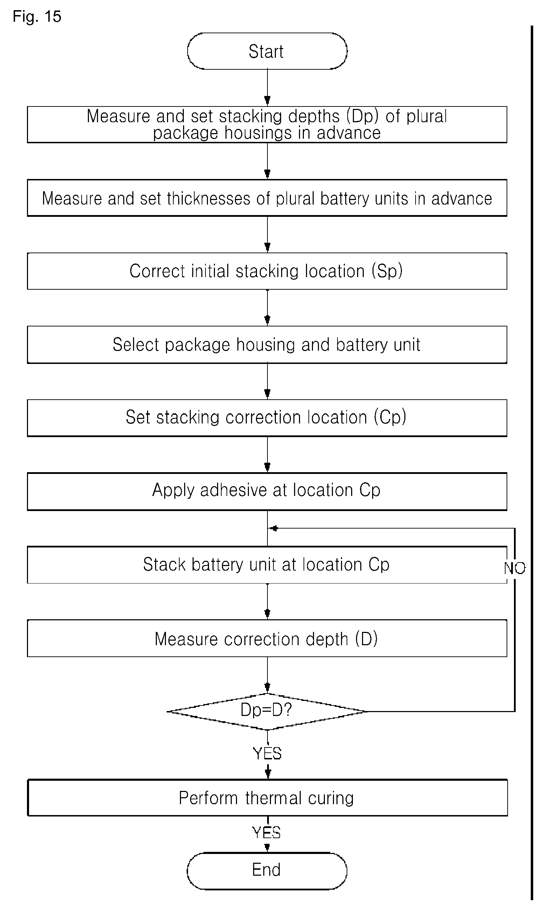

Referring to Figs. 1 and 15, a stacking depth Dp of a stacking space (a) of package housings 400 placed in a package housing storage 10 is previously set. The set stacking depth Dp is stored in a controller 220.

The thicknesses of battery units 21 may also be previously stored in the controller 220. The controller 220 may group the battery units 21 according to the thicknesses thereof when the thickness of each battery unit 21 is stored therein.

In addition, the controller 220 may measure the stacking depth Dp of the stacking space (a) of each of the package housings 400 using a height measuring unit 210, and may store and set the measured stacking depth Dp.

Subsequently, the first step of stacking the battery units 21 in the stacking space (a) of each of the package housings 400 is performed.

The controller 220 selects anyone of the package housings 400. The package housings 400 are sequentially selected.

The controller 220 selects the battery units 21.

A process of stacking and bonding a first battery unit will be described with reference to Figs. 1, 8, and 9.

The controller 220 controls operation of the battery moving unit 100, and adsorbs the first battery unit 21 placed in the battery storage 20 to move the first battery unit 21 at an upper portion of the stacking space (a) of the selected package housing 400.

That is, the vacuum nozzle drive unit 120 moves a vacuum nozzle above the first battery unit 21 along the first movement path ①. The vacuum generator 130 creates vacuum in the vacuum nozzle 110 to adsorb the first battery unit 21 to the vacuum nozzle. The vacuum nozzle drive unit 120 moves the vacuum nozzle 110, to which the first battery unit 21 is adsorbed, along the first movement path ① to place the vacuum nozzle 110 at an upper portion of the stacking space (a) of the selected package housing 400.

A process of setting an initial stacking location Sp will be described with reference to Figs. 8 and 15.

The controller 220 may allow the vacuum nozzle 110 to stand by at the initial stacking location Sp.

That is, the controller 220 controls operation of the vacuum nozzle drive unit 120 to move the vacuum nozzle 110 to the upper portion of the stacking space (a) of the package housing 400.

The height measuring unit 210 may be provided to the vacuum nozzle 110.

The vacuum nozzle drive unit 120 is an apparatus capable of moving the vacuum nozzle 210 in the XYZ-directions. Here, the XY-directions correspond to the first movement path ① and the Z-direction corresponds to a path in which the vacuum nozzle 210 is lifted in a perpendicular direction on arbitrary XY coordinates.

The height measuring unit 210 measures a depth Ds of the measuring space (a) in the package housing 400 and transmits data about the depth Ds to the controller 220.

The controller 220 lifts the vacuum nozzle 110 to change the height of the vacuum nozzle 110 using the vacuum nozzle drive unit 120 until the measured depth Ds is the same as the preset stacking depth Dp.

Thus, the vacuum nozzle 110 may be in a standby mode at the initial stacking location Sp. The initial stacking location Sp corresponds to a location providing 'Ds'.

Next, as shown in Fig. 9, the controller 220 may stack the first battery unit 21 in the stacking space (a) using the vacuum nozzle drive unit 120.

Then, the first battery unit 21 is stacked at a stacking location providing a predetermined height from the bottom of the stacking space (a).

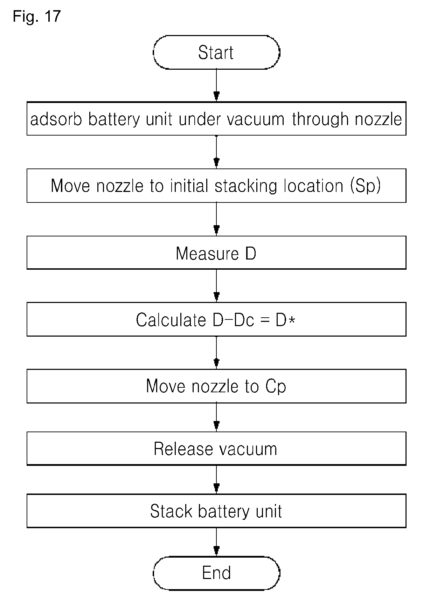

A process of setting a stacking correction location Cp will be described with reference Figs. 9 and 17.

The controller 220 calculates the stacking correction location Cp providing a depth 'D*' obtained by subtracting a preset correction height Dc from the set stacking depth Dp.

The controller moves the vacuum nozzle 110 using the vacuum nozzle drive unit 120 such that the vacuum nozzle 110 is placed at the stacking correction location Cp.

In this state, the controller 220 releases the vacuum created in the vacuum nozzle 110 using the vacuum generator 130. Thus, the first nozzle unit 21 is separated from the vacuum nozzle 110 and is dropped by a distance corresponding to the correction height Dc to be placed at the bottom of the stacking space (a).

Accordingly, the first battery unit 21 can be stably stacked on the bottom of the stacking space (a).

If the first battery unit 21 is lowered and contacts the bottom of the stacking space (a) in a state of being adsorbed to the vacuum nozzle 110, a predetermined impact force is generated and is transferred to a portion of the first battery unit 21 adsorbed to the vacuum nozzle 110.

Thus, when the first battery unit 21 is naturally dropped, impact force can be prevented from being transferred to the adsorbed portion.

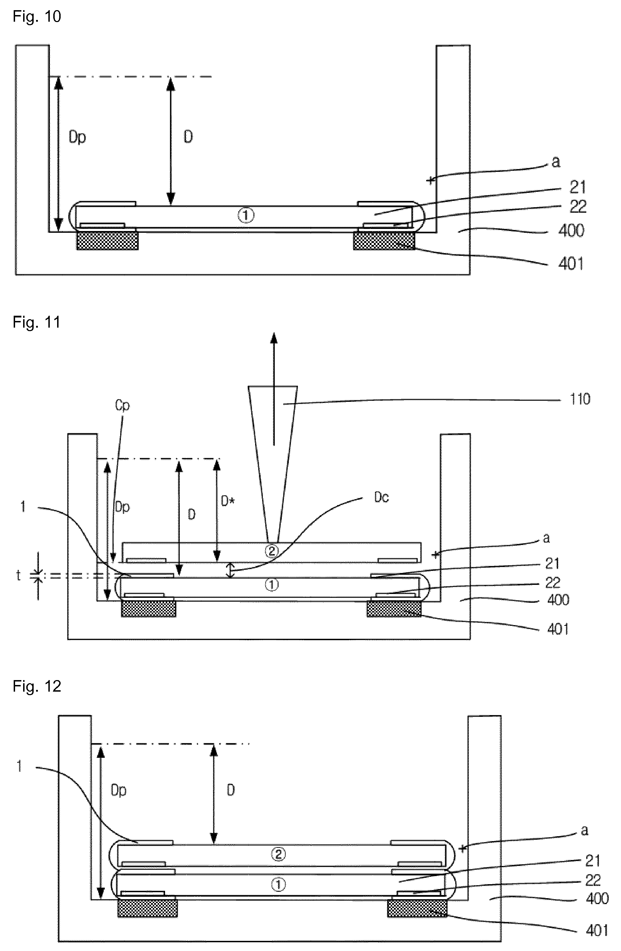

Referring to Figs. 10 and 15, the controller 220 applies the adhesive 1, which is a conductive paste such as an epoxy resin, to upper surfaces of the terminals 22 of the first unit battery 21 using the adhesive application unit 300 to form an adhesive layer having a thickness t. The thickness t may be 10 µm.

That is, the controller 220 places the adhesive application nozzle 310 at an upper portion of the stacking space (a) along the second movement path ② using the adhesive application nozzle drive unit 320. The adhesive 1 is applied to the upper surface of the first unit battery 21 to form the adhesive layer having a thickness t using the adhesive application nozzle 310.

The terminals 22 are adjacent to side surfaces of the first battery unit 21, and the adhesive 1 has fluidity. Thus, the adhesive 1 flows to a lower surface of the first battery unit 21 along the side surface of the first battery unit 21. The adhesive 1 flowing to the lower surface of the first battery unit 21 is connected to electrodes 401 formed on the bottom of the stacking space (a).

Subsequently, a first correction depth D is determined.

Referring to Figs. 11 and 15, when the first battery unit 21 is stacked and bonded in this way, the controller 220 measures a first correction depth D* to the upper surface of the first battery unit 21 through the height measuring unit 210.

The height measuring unit 210 transmits the measured first correction depth D to the controller 220.

The controller 220 determines whether the measured first correction depth D is the same as the set stacking depth Dp.

Here, the first correction depth D is a distance from the initial stacking location Sp to the upper surface of the stacked first electrode unit 21.

Next, referring to Figs. 11 and 12, the second battery unit 21 is stacked and bonded.

When the measured first correction depth D is not the same as the set stacking depth Dp, as shown in Fig. 11, the controller 220 stacks and bonds the second battery unit to the upper side of the first battery unit 21.

The controller 220 controls the vacuum nozzle 110 to adsorb the second battery unit 21, and places the second battery unit at an upper portion of the stacking space (a) of the package housing 400.

The controller 220 controls operation of the vacuum nozzle drive unit 120 such that the second battery unit 21 is placed at the corrected stacking location Cp. Here, the corrected stacking location D* corresponds to a location obtained by subtracting a predetermined correction height Dc from the first correction depth D.

Subsequently, the controller 220 releases the vacuum created in the vacuum nozzle 110 at the corrected stacking location D* to allows the second battery unit 21 to be naturally dropped to the upper side of the first battery unit 21.

At the same time, as shown in Figs. 4 and 5, the air discharge unit 112 may discharge air having a predetermined pressing force towards an upper surface of the second electrode unit 21 gripped through the air hole 111 formed in the vacuum nozzle 110.

Thus, the second battery unit 21 is pressed downwards by the discharged air, and terminal 22 of the second battery unit 21 can stably contact the adhesive 1 applied to the upper surface of the first battery unit 21.

As described above, the controller 220 allows the adhesive application unit 300 to apply the adhesive 1 to a terminal forming location of the second battery unit 21 to form an adhesive layer having a predetermined thickness t thereon.

The applied adhesive 1 flows to a lower surface of the second battery unit 21 from an upper surface of the second battery unit 21 along a side surface thereof. Thus, the adhesive 1 is connected to the terminals 22 of the second battery unit 21.

Thus, the terminals 401 of the stacking space (a) and the terminals 22 of the first and second battery units 21 are electrically connected to each other.

Subsequently, a second correction depth D is determined.

Referring to Fig. 12, when the second battery unit 21 is stacked and bonded, the controller 220 measures a second correction depth D to the second battery unit 21 through the height measuring unit 210.

The height measuring unit 210 transmits the measured second correction depth D to the controller 220.

The controller 220 determines whether the measured second correction depth D is the same as the set correction depth Dp (Dp=D?).

Here, the second correction depth D corresponds to a distance from the initial stacking location Sp and the upper surface of the stacked second battery unit 21.

Next, as shown in Fig. 13, if the measured second correction depth D is not the same as the set stacking depth Dp, the controller 220 sequentially stacks and bonds the third to sixth battery units 21 until the correction depth D becomes the same as the set stacking depth Dp.

Here, a process of stacking and bonding the third to sixth battery units 21 on upper sides of the second to fifth battery units 21 is the same as the process of stacking and bonding the second battery unit 21 described above.

Next, the package housing 400 in which the battery units 21 are stacked one above another and bonded to each other is subjected to thermal curing.

If the battery units 21 are stacked in the measuring space (a) such that the correction depth D of the battery units 21 is the same as the set stacking depth Dp of the measuring space (a), the packaged battery units 21 are cured by the heater.

That is, the terminals 22 between the battery units 21 and the electrodes 401 of the measuring space (a) are electrically connected to each other by the adhesive 1 that is the applied conductive paste.

As such, through the thermal curing process, the adhesive 1 is cured and a packaging process of the battery units 21 in the measuring space (a) is completed.

The heater according to the present invention may provide heat using ultraviolet light.

The present invention can stack and bond the battery units 21 while measuring correction depths D of the stacked battery units, such that the battery units 21 reach a desired stacking depth Dp in the measuring space (a) of each of plural package housings 400.

Further, the present invention can minimize impact generated in the battery units 21 when the battery units 21 are stacked in the measuring space (a) of the package case 400 by allowing the battery units 21 to be naturally dropped to a stacked portion to be stably placed.

In addition, the , the present invention allows a packaging process to be completed rapidly by performing a thermal curing process immediately after the battery units are stacked one above another and bonded to each other.

The present invention may also be applied to EMC molding.

## Claims

1. A method for packaging a thin film battery comprising:
a first step of measuring a stacking depth (Dp) of a stacking space (a) of a package housing (400);
a second step of sequentially stacking a plurality of battery units (21) in the stacking space (a) by means of a battery moving unit (100), wherein an electrically conductive adhesive (1) is deposited on a bottom of the package housing (400) or on an already stacked thin film battery unit (21) prior to stacking the next thin film battery unit (21), and wherein prior to depositing said adhesive (1) and stacking the battery units (21), an average depth is calculated by the controller (220) by adding an average battery unit thickness and an average application thickness of the adhesive; and
a third step of thermally curing the adhesive (1) of the completely stacked battery units (21) such that the battery units (21) are electrically connected to each other.

2. The thin film battery packaging method according to claim 1, wherein, in the first step, a sidewall length of the package housing (400) is measured, a thickness of a bottom section (400b) forming a bottom of the stacking space (a) is measured, and the stacking depth (Dp) is measured by calculating a difference between the sidewall length and the thickness of the bottom section (400b).

3. The thin film battery packaging method according to claim 1 or 2, wherein the second step comprises:
an average depth setting step of setting an average thickness of the battery units (21), setting an average application thickness of an adhesive (1) applied when the battery units (21) are stacked, adding the average thickness of the battery units (21) and the average application thickness of the adhesive (1), and setting the added value to the average depth;
a stacking and application location setting step of setting a height providing the average thickness of the battery units (21) to a stacking location of each of the battery units (21), and setting a height providing the average application thickness of the adhesive (1) to an application location of the adhesive (1);
an initial location correction step of correcting the stacking location and the application location such that the stacking depth (Dp) and the average depth are equalized; and
a stacking and application step of alternately performing a process of stacking the battery units (21) at the corrected stacking locations and applying the adhesive (1) at the corrected application locations.

4. The thin film battery packaging method according to any of claims 1 to 3, wherein the stacking depths (Dp) of package housings (400) and/or the thicknesses of battery units (21) are previously stored in the controller (220).

5. The thin film battery packaging method according to any of claims 1 to 4, wherein, before the first step, the stacking depth (Dp) of the stacking space (a) is measured at an upper portion of the stacking space (a) of the package housing (400), and a location at which the measured stacking depth (Dp) and the set stacking depth are equalized is set to an initial location.

6. A thin film battery packaging apparatus comprising:
a battery moving unit (100) moving a plurality of battery units (21) and sequentially stacking the battery units (21) in a stacking space (a) of a package housing (400);
a package control unit (200) controlling the battery moving unit (100) such that a stacking depth (Dp) set in the stacking space (a) of the package housing (400) and a calculated average depth are equalized, wherein the average depth is calculated by adding an average battery unit thickness and an average application thickness of the adhesive;
an adhesive application unit (300) comprising an adhesive application nozzle (310) for applying an electrically conductive adhesive (1) to the stacking space (a) and the battery units (21), and an adhesive application nozzle drive unit (320) moving the adhesive application nozzle (310) along a predetermined movement path; and
a heater thermally curing the adhesive (1) of the completely stacked battery units (21) such that the battery units (21) are electrically connected to each other.

7. The thin film battery packaging apparatus according to claim 6, wherein the package control unit (200) comprises:
a height measuring unit (210) provided to the battery moving unit (100), and measuring the stacking depth (Dp) and a correction depth (D) of each of the battery units (21) stacked in the stacking space (a); and
a controller (220) electrically connected to the height measuring unit (210), controlling operation of the battery moving unit (100) such that the measured correction depth (D) becomes equal to the stacking depth (Dp).

8. The thin film battery packaging apparatus according to claim 7, wherein the controller (220) controls the height measuring unit (210) to measure the stacking depth (Dp) of the stacking space (a) in the packaging housing (400).

9. The thin film battery packaging apparatus according to claim 7, wherein the controller (220) corrects an initial stacking location (Sp) of the battery moving unit (100) to locate the battery moving unit (100), and the initial stacking location (Sp) is a location at which the set stacking depth (Dp) of the package housing (400) and the stacking depth (Dp) of the stacking space (a) measured by the height measuring unit (210) are the same.

10. The thin film battery packaging apparatus according to any of claims 6 to 9, the package control unit (200) correcting stacking locations of the battery units (21) such that the average depth becomes equal to the stacking depth (Dp).

11. The thin film battery packaging apparatus according to claim 10, wherein the package control unit (200) comprises:
a height measuring unit (210) provided to the battery moving unit (100) and measuring the stacking depth (Dp); and
a controller (220) electrically connected to the height measuring unit (210), the controller (220) correcting stacking locations of the battery units (21) such that the average depth becomes equal to the stacking depth (Dp), and controlling the battery moving unit (100) such that the battery units (21) are sequentially stacked in the stacking space (a) at the corrected stacking locations.

12. The thin film battery packaging apparatus according to claim 11, wherein the controller (220) sets an average thickness of the battery units (21), sets an average application thickness of an adhesive (1) applied when the battery units (21) are stacked, adds the average thickness of the battery units (21) and the average application thickness of the adhesive (1), and sets the added value to the average depth;
sets a height providing the average thickness of the battery units (21) to a stacking location of each of the battery units (21), and sets a height providing the average application thickness of the adhesive (1) to an application location of the adhesive (1);
corrects the stacking location and the application location such that the stacking depth (Dp) and the average depth are equalized; and
stacks the battery units (21) at the corrected stacking locations through the battery moving unit (100), and applies the adhesive (1) at the corrected application location through the adhesive application unit (300).

13. The thin film battery packaging apparatus according to any one of claims 6 to 12, wherein the battery moving unit (100) comprises:
a vacuum nozzle (110) adsorbing or gripping the battery units (21) using vacuum provided from an outside;
an air discharge unit (112) provided to the vacuum nozzle (110) and discharging air from the outside to the sequentially stacked battery units (21) to provide a predetermined pressing force to the battery units (21); and
a vacuum nozzle driver (120) moving the vacuum nozzle (110) along a predetermined movement path.

14. The thin film battery packaging apparatus according to any one of claims 6 to 12, further comprising:
a package storage (10) in which a plurality of package housings (400) having a stacking space is disposed; and
a battery storage (20) in which a plurality of battery units (21) having a predetermined thickness is disposed,
wherein the package control unit (200) selects any of the plurality of package housings (400) to stack the battery units (21).

15. The thin film battery packaging apparatus according to any one of claims 6 to 12, wherein the package housing (400) comprises:
a housing body having the stacking space (a) having an open upper side and formed of an insulating material;
a metallic support member stepped outward at an upper end of the housing body; and
a metallic cover welded to an upper surface of the support member and sealing the stacking space (a).

## Patentansprüche

1. Verfahren zum Verpacken einer Dünnschichtbatterie, mit:
einem ersten Schritt, bei dem eine Stapeltiefe (Dp) eines Stapelraums (a) eines Packungsgehäuses (400) gemessen wird,
einem zweiten Schritt, bei dem mehrere Batterieeinheiten (21) mittels einer Batterieverlagerungseinheit (100) aufeinanderfolgend in dem Stapelraum (a) gestapelt werden, wobei an einem Boden des Packungsgehäuses (400) oder an einer bereits gestapelten Dünnschichtbatterieeinheit (21) ein elektrisch leitfähiger Klebstoff (1) aufgebracht wird, bevor die nächste Dünnschichtbatterieeinheit (21) aufgestapelt wird, und wobei vor dem Aufbringen des Klebstoffs (1) und Stapeln der Batterieeinheiten (21) eine Durchschnittstiefe von der Steuereinheit (220) berechnet wird, indem eine durchschnittliche Batterieeinheitsstärke und eine durchschnittliche Auftragsstärke des Klebstoffs addiert werden, und
einem dritten Schritt, bei dem der Klebstoff (1) der vollständig gestapelten Batterieeinheiten (21) thermisch so ausgehärtet wird, dass die Batterieeinheiten (21) elektrisch miteinander verbunden sind.

2. Dünnschichtbatterieverpackungsverfahren nach Anspruch 1, bei dem im ersten Schritt eine Seitenwandlänge des Packungsgehäuses (400) gemessen wird, eine Stärke eines Bodenabschnitts (400b), der einen Boden des Stapelraums (a) bildet, gemessen wird, und die Stapeltiefe (Dp) gemessen wird, indem eine Differenz zwischen der Seitenwandlänge und der Stärke des Bodenabschnitts (400b) berechnet wird.

3. Dünnschichtbatterieverpackungsverfahren nach Anspruch 1 oder 2, bei dem der zweite Schritt Folgendes umfasst:
einen urchschnittstiefeeinstellschritt, bei dem eine durchschnittliche Stärke der Batterieeinheiten (21) eingestellt wird, eine durchschnittliche Auftragsstärke eines Klebstoffs (1) eingestellt wird, der beim Stapeln der Batterieeinheiten (21) aufgetragen wird, die durchschnittliche Stärke der Batterieeinheiten (21) und die durchschnittliche Auftragsstärke des Klebstoffs (1) addiert werden und der addierte Wert auf die Durchschnittstiefe eingestellt wird,
einen Stapel- und Auftragsorteinstellschritt, bei dem eine Höhe, die die durchschnittliche Stärke der Batterieeinheiten (21) liefert, auf einen Stapelort jeder der Batterieeinheiten (21) eingestellt wird und eine Höhe, die die durchschnittliche Auftragsstärke des Klebstoffs (1) liefert, auf einen Auftragsort des Klebstoffs (1) eingestellt wird,
einen Anfangsortskorrekturschritt, bei dem der Stapelort und der Auftragsort so korrigiert werden, dass die Stapeltiefe (Dp) und die Durchschnittstiefe angeglichen werden, und
einen Stapel- und Auftragsschritt, bei dem abwechselnd ein Vorgang des Stapelns der Batterieeinheiten (21) an den korrigierten Stapelorten und des Auftragens des Klebstoffs (1) an den korrigierten Auftragsorten durchgeführt wird.

4. Dünnschichtbatterieverpackungsverfahren nach einem der Ansprüche 1 bis 3, bei dem die Stapeltiefen (Dp) von Packungsgehäusen (400) und/oder die Stärken von Batterieeinheiten (21) vorher in der Steuereinheit (220) gespeichert werden.

5. Dünnschichtbatterieverpackungsverfahren nach einem der Ansprüche 1 bis 4, bei dem vor dem ersten Schritt die Stapeltiefe (Dp) des Stapelraums (a) an einem oberen Teil des Stapelraums (a) des Packungsgehäuses (400) gemessen wird und ein Ort, an dem die gemessene Stapeltiefe (Dp) und die eingestellte Stapeltiefe angeglichen werden, auf einen Anfangsort eingestellt wird.

6. Dünnschichtbatterieverpackungsvorrichtung mit:
einer Batterieverlagerungseinheit (100), die mehrere Batterieeinheiten (21) verlagert und die Batterieeinheiten (21) aufeinanderfolgend in einem Stapelraum (a) eines Packungsgehäuses (400) stapelt,
einer Packungssteuereinheit (200), die die Batterieverlagerungseinheit (100) so steuert, dass eine im Stapelraum (a) des Packungsgehäuses (400) eingestellte Stapeltiefe (Dp) und eine berechnete Durchschnittstiefe angeglichen werden, wobei die Durchschnittstiefe berechnet wird, indem eine durchschnittliche Batterieeinheitsstärke und eine durchschnittliche Auftragsstärke des Klebstoffs addiert werden,
einer Klebstoffauftragseinheit (300), die eine Klebstoffauftragsdüse (310) zum Auftragen eines elektrisch leitfähigen Klebstoffs (1) auf den Stapelraum (a) und die Batterieeinheiten (21) sowie eine Klebstoffauftragsdüsenantriebseinheit (320) umfasst, die die Klebstoffauftragsdüse (310) entlang einer vorbestimmten Bewegungsbahn bewegt, und
einer Heizvorrichtung, die den Klebstoff (1) der vollständig gestapelten Batterieeinheiten (21) thermisch so aushärtet, dass die Batterieeinheiten (21) elektrisch miteinander verbunden sind.

7. Dünnschichtbatterieverpackungsvorrichtung nach Anspruch 6, bei der die Packungssteuereinheit (200) Folgendes umfasst:
eine Höhenmesseinheit (210), mit der die Batterieverlagerungseinheit (100) versehen ist und die die Stapeltiefe (Dp) und eine Korrekturtiefe (D) jeder der in dem Stapelraum (a) gestapelten Batterieeinheiten (21) misst, und
eine Steuereinheit (220), die mit der Höhenmesseinheit (210) elektrisch verbunden ist und den Betrieb der Batterieverlagerungseinheit (100) so steuert, dass die gemessene Korrekturtiefe (D) gleich der Stapeltiefe (Dp) wird.

8. Dünnschichtbatterieverpackungsvorrichtung nach Anspruch 7, bei der die Steuereinheit (220) die Höhenmesseinheit (210) so steuert, dass diese die Stapeltiefe (Dp) des Stapelraums (a) in dem Verpackungsgehäuse (400) misst.

9. Dünnschichtbatterieverpackungsvorrichtung nach Anspruch 7, bei der die Steuereinheit (220) einen Anfangsstapelort (Sp) der Batterieverlagerungseinheit (100) korrigiert, um die Batterieverlagerungseinheit (100) örtlich festzulegen, und der Anfangsstapelort (Sp) ein Ort ist, an dem die eingestellte Stapeltiefe (Dp) des Packungsgehäuses (400) und die von der Höhenmesseinheit (210) gemessene Stapeltiefe (Dp) des Stapelraums (a) gleich sind.

10. Dünnschichtbatterieverpackungsvorrichtung nach einem der Ansprüche 6 bis 9, wobei die Packungssteuereinheit (200) Stapelorte der Batterieeinheiten (21) so korrigiert, dass die Durchschnittstiefe gleich der Stapeltiefe (Dp) wird.

11. Dünnschichtbatterieverpackungsvorrichtung nach Anspruch 10, bei der die Packungssteuereinheit (200) Folgendes umfasst:
eine Höhenmesseinheit (210), mit der die Batterieverlagerungseinheit (100) versehen ist und die die Stapeltiefe (Dp) misst, und
eine Steuereinheit (220), die mit der Höhenmesseinheit (210) elektrisch verbunden ist, wobei die Steuereinheit (220) Stapelorte der Batterieeinheiten (21) so korrigiert, dass die Durchschnittstiefe gleich der Stapeltiefe (Dp) wird, und die Batterieverlagerungseinheit (100) so steuert, dass die Batterieeinheiten (21) an den korrigierten Stapelorten aufeinanderfolgend im Stapelraum (a) gestapelt werden.

12. Dünnschichtbatterieverpackungsvorrichtung nach Anspruch 11, bei der die Steuereinheit (220) eine durchschnittliche Stärke der Batterieeinheiten (21) einstellt, eine durchschnittliche Auftragsstärke eines Klebstoffs (1) einstellt, der beim Stapeln der Batterieeinheiten (21) aufgetragen wird, die durchschnittliche Stärke der Batterieeinheiten (21) und die durchschnittliche Auftragsstärke des Klebstoffs (1) addiert und den addierten Wert auf die Durchschnittstiefe einstellt,
eine Höhe, die die durchschnittliche Stärke der Batterieeinheiten (21) liefert, auf einen Stapelort jeder der Batterieeinheiten (21) einstellt und eine Höhe, die die durchschnittliche Auftragsstärke des Klebstoffs (1) liefert, auf einen Auftragsort des Klebstoffs (1) einstellt,
den Stapelort und den Auftragsort so korrigiert, dass die Stapeltiefe (Dp) und die Durchschnittstiefe angeglichen werden, und
die Batterieeinheiten (21) mittels der Batterieverlagerungseinheit (100) an den korrigierten Stapelorten stapelt und den Klebstoff (1) mittels der Klebstoffauftragseinheit (300) an dem korrigierten Auftragsort aufträgt.

13. Dünnschichtbatterieverpackungsvorrichtung nach einem der Ansprüche 6 bis 12, bei der die Batterieverlagerungseinheit (100) Folgendes umfasst:
eine Vakuumdüse (110), die die Batterieeinheiten (21) unter Verwendung eines von einer Außenseite her bereitgestellten Vakuums adsorbiert bzw. greift,
eine Luftausströmeinheit (112), die der Vakuumdüse (110) bereitgestellt ist und Luft von der Außenseite zu den aufeinanderfolgend gestapelten Batterieeinheiten (21) ausströmen lässt, um den Batterieeinheiten (21) eine vorbestimmte Presskraft bereitzustellen, und
einen Vakuumdüsentreiber (120), der die Vakuumdüse (110) entlang einer vorbestimmten Bewegungsbahn bewegt.

14. Dünnschichtbatterieverpackungsvorrichtung nach einem der Ansprüche 6 bis 12, ferner mit:
einem Packungslager (10), in dem mehrere Packungsgehäuse (400), die einen Stapelraum aufweisen, angeordnet sind, und
einem Batterielager (20), in dem mehrere Batterieeinheiten (21), die eine vorbestimmte Stärke aufweisen, angeordnet sind,
wobei die Packungssteuereinheit (200) eines der mehreren Packungsgehäuse (400) zum Stapeln der Batterieeinheiten (21) auswählt.

15. Dünnschichtbatterieverpackungsvorrichtung nach einem der Ansprüche 6 bis 12, bei der das Packungsgehäuse (400) Folgendes umfasst:
einen Gehäusekörper, der den Stapelraum (a) aufweist, der eine offene Oberseite hat, und aus einem Isoliermaterial gebildet ist,
ein metallisches Tragelement, das an einem oberen Ende des Gehäusekörpers nach außen gestuft ist, und
eine metallische Abdeckung, die mit einer oberen Fläche des Tragelements verschweißt ist und den Stapelraum (a) verschließt.

## Revendications

1. Procédé pour l'empaquetage d'une batterie à couche mince, comprenant:
une première étape de mesure d'une profondeur d'empilement (Dp) d'un espace d'empilement (a) d'un boîtier d'empaquetage (400) ;
une deuxième étape d'empilage séquentiel d'une pluralité d'unités de batterie (21) dans l'espace d'empilement (a) au moyen d'une unité de déplacement de batterie (100), un adhésif électriquement conducteur (1) étant déposé sur un fond du boîtier d'empaquetage (400) ou sur une unité (21) de batterie à couche mince déjà empilée avant l'empilement de la prochaine unité (21) de batterie à couche mince, et une profondeur moyenne étant calculée avant le dépôt de l'adhésif (1) et l'empilement des unités de batterie (21) au moyen du contrôleur (220) en additionnant une épaisseur d'unité de batterie moyenne et une épaisseur moyenne d'application de l'adhésif, et
une troisième étape de durcissement thermique de l'adhésif (1) des unités de batterie (21) entièrement empilées de sorte que les unités de batterie (21) soient électriquement reliées les unes aux autres.

2. Procédé d'empaquetage de batterie à couche mince selon la revendication 1, dans lequel dans la première étape, une longueur d'une paroi latérale du boîtier d'empaquetage (400) est mesurée, une épaisseur d'un tronçon de fond (400b) qui forme un fond de l'espace d'empilement (a) est mesurée, et la profondeur d'empilement (Dp) est mesurée en calculant une différence entre la longueur de la paroi latérale et l'épaisseur du tronçon de fond (400b).

3. Procédé d'empaquetage de batterie à couche mince selon la revendication 1 ou 2, dans lequel la deuxième étape comprend :
une étape de fixation de profondeur moyenne dans laquelle une épaisseur moyenne des unités de batterie (21) est fixée, une épaisseur moyenne d'application d'un adhésif (1) appliqué lorsque les unités de batterie (21) sont empilées est fixée, l'épaisseur moyenne des unités de batterie (21) et l'épaisseur moyenne d'application de l'adhésif (1) sont additionnées, et la valeur additionnée est fixée à la profondeur moyenne,
une étape de fixation de l'emplacement d'empilement et d'application dans laquelle une hauteur fournissant l'épaisseur moyenne des unités de batterie (21) est fixée à un emplacement d'empilement de chacune des unités de batterie (21) et une hauteur fournissant l'épaisseur moyenne d'application de l'adhésif (1) est fixée à un emplacement d'application de l'adhésif (1),
une étape de correction d'emplacement initial dans laquelle l'emplacement d'empilement et l'emplacement d'application sont corrigés de sorte que la profondeur d'empilement (Dp) et la profondeur moyenne soient égalisées, et
une étape d'empilement et d'application dans laquelle une procédure d'empilement des unités de batterie (21) aux emplacements d'empilement corrigés et d'application de l'adhésif (1) aux emplacements d'application corrigés sont effectués en alternance.

4. Procédé d'empaquetage de batterie à couche mince selon l'une des revendications 1 à 3, dans lequel les profondeurs d'empilement (Dp) des boîtiers d'empaquetage (400) et/ou les épaisseurs des unités de batterie (21) sont préalablement mémorisées dans le contrôleur (220).

5. Procédé d'empaquetage de batterie à couche mince selon l'une des revendications 1 à 4, dans lequel avant la première étape, la profondeur d'empilement (Dp) de l'espace d'empilement (a) est mesurée dans un tronçon supérieur de l'espace d'empilement (a) du boîtier d'empaquetage (400), et un emplacement auquel la profondeur d'empilement (Dp) mesurée et la profondeur d'empilement fixée sont égalisées est fixé à un emplacement initial.

6. Dispositif d'empaquetage de batterie à couche mince, comportant :
une unité de déplacement de batterie (100) déplaçant une pluralité d'unités de batterie (21) et empilant de manière séquentielle les unités de batterie (21) dans un espace d'empilement (a) d'un boîtier d'empaquetage (400),
une unité de commande d'empaquetage (200) commandant l'unité de déplacement de batterie (100) de telle sorte qu'une profondeur d'empilement (Dp) fixée dans l'espace d'empilement (a) du boîtier d'empaquetage (400) et une profondeur moyenne calculée soient égalisées, la profondeur moyenne étant calculée en additionnant une épaisseur d'unité de batterie moyenne et une épaisseur d'application moyenne de l'adhésif,
une unité d'application d'adhésif (300) comportant une buse d'application d'adhésif (310) pour appliquer un adhésif (1) électriquement conducteur sur l'espace d'empilement (a) et les unités de batterie (21), et une unité d'entraînement (320) de buse d'application d'adhésif déplaçant la buse d'application d'adhésif (310) le long d'un chemin de déplacement déterminé, et
un moyen de chauffage durcissant thermiquement l'adhésif (1) des unités de batterie (21) entièrement empilées de sorte que les unités de batterie (21) soient électriquement reliées les unes aux autres.

7. Dispositif d'empaquetage de batterie à couche mince selon la revendication 6, dans lequel l'unité de commande d'empaquetage (200) comporte :
une unité de mesure de hauteur (210) prévue pour l'unité de déplacement de batterie (100) et mesurant la profondeur d'empilement (Dp) et une profondeur de correction (D) de chacune des unités de batterie (21) empilées dans l'espace d'empilement (a), et
un contrôleur (220) électriquement relié à l'unité de mesure de hauteur (210) qui commande le fonctionnement de l'unité de déplacement de batterie (100) de sorte que la profondeur de correction (D) mesurée devienne égale à la profondeur d'empilement (Dp).

8. Dispositif d'empaquetage de batterie à couche mince selon la revendication 7, dans lequel le contrôleur (220) commande l'unité de mesure de hauteur (210) de manière à ce qu'elle mesure la profondeur d'empilement (Dp) de l'espace d'empilement (a) dans le boîtier d'empaquetage (400).

9. Dispositif d'empaquetage de batterie à couche mince selon la revendication 7, dans lequel le contrôleur (220) corrige un emplacement d'empilement initial (Sp) de l'unité de déplacement de batterie (100) pour placer l'unité de déplacement de batterie (100), et l'emplacement d'empilement initial (Sp) est un emplacement auquel la profondeur d'empilement fixée (Dp) du boîtier d'empaquetage (400) et la profondeur d'empilement (Dp) de l'espace d'empilement (a) mesurée par l'unité de mesure de hauteur (210) sont égales.

10. Dispositif d'empaquetage de batterie à couche mince selon l'une des revendications 6 à 9, dans lequel l'unité de commande d'empaquetage (200) corrige les emplacements d'empilement des unités de batterie (21) de sorte que la profondeur moyenne devienne égale à la profondeur d'empilement (Dp).

11. Dispositif d'empaquetage de batterie à couche mince selon la revendication 10, dans lequel l'unité de commande d'empaquetage (200) comporte :
une unité de mesure de hauteur (210) prévue pour l'unité de déplacement de batterie (100) et mesurant la profondeur d'empilement (Dp), et
un contrôleur (220) électriquement relié à l'unité de mesure de hauteur (210), le contrôleur (220) corrigeant les emplacements d'empilement des unités de batterie (21) de sorte que la profondeur moyenne devienne égale à la profondeur d'empilement (Dp) et contrôlant l'unité de déplacement de batterie (100) de sorte que les unités de batterie (21) soient séquentiellement empilées dans l'espace d'empilement (a) aux emplacements d'empilement corrigés.

12. Dispositif d'empaquetage de batterie à couche mince selon la revendication 11, dans lequel le contrôleur (220) fixe une épaisseur moyenne des unités de batterie (21), fixe une épaisseur moyenne d'application d'un adhésif (1) appliqué lorsque les unités de batterie (21) sont empilées, additionne l'épaisseur moyenne des unités de batterie (21) et l'épaisseur moyenne d'application de l'adhésif (1) et fixe la valeur additionnée à la profondeur moyenne,
fixe une hauteur fournissant l'épaisseur moyenne des unités de batterie (21) à un emplacement d'empilement de chacune des unités de batterie (21) et fixe une hauteur fournissant l'épaisseur moyenne d'application de l'adhésif (1) à un emplacement d'application de l'adhésif (1),
corrige l'emplacement d'empilement et l'emplacement d'application de sorte que la profondeur d'empilement (Dp) et la profondeur moyenne soient égalisées, et
empile les unités de batterie (21) aux emplacement d'empilement corrigés au moyen de l'unité de déplacement de batterie (100) et applique l'adhésif (1) à l'emplacement d'application corrigé au moyen de l'unité d'application d'adhésif (300).

13. Dispositif d'empaquetage de batterie à couche mince selon l'une des revendications 6 à 12, dans lequel l'unité de déplacement de batterie (100) comporte :
une buse à vide (110) adsorbant ou saisissant les unités de batterie (21) en utilisant un vide fourni par un extérieur,
une unité d'écoulement d'air (112) prévue pour la buse à vide (110) et délivrant de l'air de l'extérieur vers les unités de batterie (21) empilées séquentiellement de manière à fournir une force de pression prédéterminée aux unités de batterie (21), et
un entraînement de buse à vide (120) déplaçant la buse à vide (110) le long d'un chemin de déplacement prédéterminé.

14. Dispositif d'empaquetage de batterie à couche mince selon l'une des revendications 6 à 12, comportant en outre :
un stock d'empaquetage (10) dans lequel est disposée une pluralité de boîtiers d'empaquetage (400) présentant un espace d'empilement, et
un stock de batteries (20) dans lequel est disposée une pluralité d'unités de batterie (21) présentant une épaisseur prédéterminée,
l'unité de commande d'empaquetage (200) choisissant l'un des plusieurs boîtiers d'empaquetage (400) pour empiler les unités de batterie (21).

15. Dispositif d'empaquetage de batterie à couche mince selon l'une des revendications 6 à 12, dans lequel le boîtier d'empaquetage (400) comporte :
un corps de boîtier comportant l'espace d'empilement (a) qui présente un côté supérieur ouvert et qui est réalisé en une matière isolante,
un élément support métallique étagé vers l'extérieur à une extrémité supérieure du corps de boîtier, et
un recouvrement métallique soudé à une surface supérieure de l'élément support et étanchant l'espace d'empilement (a).
